# EUROPEAN PATENT APPLICATION

(11) **EP 2 584 512 A1**
(43) Date of publication of application: **24.04.2013**
(21) Application number: 12189337.4
(22) Date of filing: 19.10.2012
(51) Int. Cl.: G06Q 20/00, A63F 3/06

(54) **Voucher and method for determining validity thereof**

(30) Priority: 21.10.2011 IT GE20110119
(71) Applicant: Paybay Networks Srl, 16121 Genova (IT)
(72) Inventor: Ferretto, Luigi, 16121 Genova (IT)
(74) Representative: Karaghiosoff, Giorgio Alessandro

(57) **Abstract**

Voucher, of luncheon voucher type or the like, having a specific monetary value, which voucher is intended for being given to an operator of a system managing and checking said voucher for acquiring goods or products of any kind for a corresponding value equal to the monetary value of said voucher.

The voucher has an identification code, of the barcode type or the like, which univocally identifies the voucher.

Moreover the identification code is at least partially covered by a layer of removable material, such that said identification code is unreadable till said layer of removable material is removed, making the use of said voucher immediately evident.

The present invention further relates to a method.

## Description

The present invention relates to a voucher, of luncheon voucher type or the like, having a specific monetary value, which voucher is intended for being given to an operator of a system managing said voucher for acquiring goods or products of any kind for a corresponding value equal to the monetary value of said voucher.

The voucher has an identification code, of the barcode type or the like, which identification code univocally identifies said voucher.

That just described is the common configuration of vouchers known in the prior art and particularly of their most widespread version, namely luncheon vouchers.

Luncheon vouchers are mainly used by companies in order to give their employees a voucher for acquiring a meal and generally they have a monetary value that allows the user to acquire goods or products for an amount of money equal to the value of his/her own luncheon voucher.

For management needs such luncheon vouchers can be univocally identified by an identification code.

The user gives his/her own luncheon voucher to a provider of goods and products who in turn gives the luncheon voucher to an operator of a system managing the luncheon vouchers who enters the identification code of the luncheon voucher in a database and he/she pays a monetary amount to the provider on the basis of the number and value of the given luncheon vouchers.

The entry of the identification code makes the luncheon voucher invalid, it prevents the luncheon voucher from being improperly used, that is from being used more than once therefore requiring a double payment by the operator dealing with the management of luncheon vouchers.

Particularly there are two main entering modes for the identification code.

According to first mode the provider directly enters the identification code inside a central database: the user gives the luncheon voucher to the provider that by means of prior art known devices, such as barcode scanners or the like, reads the identification code and makes the luncheon voucher invalid, once it has been given to him by the user, by entering the identification code.

In this case the operator of luncheon voucher management system is informed of the occurred entry and he/she will pay the provider on the basis of the entered identification codes, which univocally identify each luncheon voucher in such database.

A second mode on the contrary provides the provider to accept the luncheon voucher given by the user and in turn to give it to the operator of the luncheon voucher management system, who deals with the entry and the consequent invalidation.

Regardless of the mode by means of which the identification code is entered, different drawbacks and malfunctions of the whole system are found, since the several delivery passages among the players of the system, the user, the provider and the operator of the management system respectively, do not provide checks.

The only check is the final one made by the operator when he/she enters the identification code, but it is not possible to go back to the guilty person in case of a possible fraud against the operator of the management system or against the provider or the user, a fraud that provides the same luncheon voucher to be counterfeited or used for two times consecutively.

For example with the vouchers known in the prior art it is possible for a provider to accept a luncheon voucher from a user, to enter the identification code and then to decide to sell or use the voucher with another provider that has not the possibility to verify in real time that the identification code related to that voucher has been already used.

This leads to a damage both for the second provider and for the operator of the management system, since this proves that his/her management system is not safe.

Another drawback with prior art known vouchers is the counterfeiting thereof, since a user or a provider can easily duplicate a voucher and therefore use the same voucher more than once, even in this case causing an economic damage.

The operator of the luncheon voucher management system sells the vouchers to a company, which gives them to an employee for acquiring goods and products by a provider thereof who takes the luncheon vouchers and in turn he/she gives them to the operator of the management system. The operator of the management system pays the luncheon voucher keeping a percentage on the monetary value of each luncheon voucher and such percentage is the gain of the operator of the management system.

Consequently a luncheon voucher that is improperly used or that is counterfeited generates an economic damage both for the operator of the management system and for provider of goods and products.

There is therefore an unsatisfied need for providing a luncheon voucher, that, by relatively simple and inexpensive arrangements, allows the drawbacks related to the prior art to be solved and particularly that can be used within an efficient system without causing economic losses to the several players.

The present invention achieves the above aims by providing a voucher as described hereinbefore, wherein the identification code is at least partially covered by a layer of removable material, such that the identification code is unreadable till the layer of removable material is removed, making the use of the voucher immediately evident.

Therefore the identification code is made as unreadable by using a layer of removable material and only by removing this material layer the code is revealed.

Therefore a system identifying that the voucher has been used and for the safety against misuses is created, since the removal, also a partial one, of the layer of removable material makes the voucher not usable and not valid anymore.

Therefore the removal of the removable material layer makes immediately evident that the voucher has been used.

Advantageously the voucher object of the present invention is made like vouchers known in the prior art, namely the voucher is composed of a sized sheet or cardboard for example like a banknote, that provides at least one area inside which the identification code is written.

However the area is at least partially covered by the layer of removable material.

According to an improvement the voucher object of the present invention further provides at least one area inside which the monetary value is written.

Such configuration simply is a possible embodiment of the voucher object of the present invention, but the concept of making the identification code of a voucher not visible can be used on any type of voucher, regardless of the embodiment of the voucher.

Preferably the layer of removable material is composed of an ink of the type provided on "scratch and win" cards.

This particular feature allows a voucher to be made which is hard to be duplicated, since the creation of this particular ink requires an evolved technology, currently known by few companies and therefore hard to be carried out by possible counterfeiters.

According to a possible variant embodiment it is possible to provide to print on the removable material layer, in this case the removable ink of the "scratch and win" type, drawings or alphanumeric characters.

The possibility of introducing such drawings or alphanumeric characters further increases the difficulty in counterfeiting this type of ink.

Such aspect is still more advantageous if the alphanumeric characters or drawings have a correspondence on the portion of the voucher not covered by the removable material layer.

For instance it is possible to provide a word which is printed partially on the removable ink and partially on the visible voucher, or a drawing that starts on the removable ink surface and that ends by having a correspondence on the portion of the voucher not covered by the removable material layer.

As an alternative the removable material layer can be composed of a layer of adhesive material, whose removal irreversibly damages the area inside which the identification code is written.

Preferably the adhesive layer is shaped in such a manner that the area surrounding the identification code is damaged, without making it unreadable, but highlighting at the same time that the voucher has been used.

According to an improvement of the voucher object of the present invention, the area inside which the identification code is written is completely covered by the removable material layer.

As it has been previously described there are provided two modes for entering the identification code, a first mode providing the provider of goods and products to directly enter the identification code and a second mode wherein the provider gives the voucher to the operator of the management system who deals with the entry of the identification code, defined for description simplicity as a first "online" mode and a second "offline" mode respectively.

According to a variant embodiment of the voucher object of the present invention, the area inside which the identification code is written is divided in at least two sub-areas both covered with the removable material layer, the material layer being removable independently and selectively from each individual sub-area.

Particularly the identification code is composed of a plurality of alphanumeric characters, of which a first portion is provided inside a first sub-area, while a second portion is provided inside a second sub-area, the two sub-areas being covered by the removable material layer individually and independently.

Advantageously such characteristic allows two different checks to be made on the same luncheon voucher, checks that can be managed in a different way by the provider of goods and products and by the operator of the voucher management system.

Particularly it is possible to diversify the checks on the basis of the mode of entering the identification code, whether it is made "online" or "offline".

In the "online" mode the removable material layer is removed till completely reading the identification code, and the code is immediately entered in a central database, making the voucher unusable, as in the above described cases.

Further in the "offline" mode the removable material layer cannot be completely removed, since in this way upon a subsequent delivery of the vouchers to the operator of the management system, they may not be accepted.

The variant embodiment just described overcomes this obstacle by providing the identification code and the corresponding removable material layer to be divided into two parts, one of which removable in the "offline" mode by keeping the other one, or both of them contemporaneously removable in the "online" mode.

It is possible to provide the identification code to be divided always in the same mode.

For example in the case the identification code is a barcode it is possible to provide that the part of removable material layer to be removed in the "offline" mode is always the one relating to the first three or last three digits of the barcode.

The characteristic just described has a further advantage, mainly related to the counterfeiting of the removable ink of the "scratch and win" type.

In the case of an "offline" entry the provider of goods and products has not the possibility of verifying whether the removable ink is the original one or the counterfeited one and at the same time he/she cannot give to the operator of the management system a voucher with the material layer completely removed, since the operator does not pay him/her the monetary amount.

The possibility of dividing into two portions the identification code and also the layer of removed material allows the provider of goods and products to check the validity of the removable ink, without invalidating the voucher and thus obtaining the refund.

According to a possible variant embodiment, the first portion or the second portion of the identification code is written as visible on the voucher, outside the area covered by the removable material layer.

Such aspect is particularly advantageous in the "offline" entry mode, since the provider of goods and products can remove the material layer of one of the two sub-areas and, in case of a valid voucher, he/she will have to find a correspondence between the digits outside the area covered by the removable material layer and those written inside the area just revealed.

As it will be described below it is possible to provide that the same digits are also written on a stub associated to the voucher.

According to a further improvement the voucher object of the present invention is provided inserted within a block containing a plurality of vouchers.

The block is made by joining a plurality of stubs, wherein each stub is connected to a relative voucher by a removable interface region.

Moreover on each stub there is provided a portion of the identification code, particularly the portion of the identification code inserted in one of the two sub-areas.

Such improvement advantageously allows a further check, which can be made by the provider of goods and products and/or by the operator of the management system. Each voucher remains ideally related to its own stub and by knowing the number of stubs on the market it will be always possible to obtain the number and the type of emitted vouchers.

The present invention relates also to a method for checking the validty of vouchers.

Such method is based on the use of a voucher of luncheon voucher type or the like, having a specific monetary value and which is intended for being given to an operator of a system managing said voucher.

The voucher has an identification code as above, of the barcode type or the like, which univocally identifies the voucher.

The validity of the voucher is checked by reading the identification code, the identification code being at least partially covered by a layer of removable material, such that the identification code is unreadable till the layer of removable material is removed.

According to an improvement of the method object of the present invention, the voucher is invalidated once the identification code is read, which is stored in a database.

Advantageously the method object of the present invention provides the following steps:
a) the voucher is given by a user for acquiring goods or products of any kind, to a provider of said goods or products,
b) the provider of the goods or products removes the layer of removable material and enters the identification code in the database.

Such variant embodiment relates particularly to the "online" entry mode.

In the case an "offline" entry mode would be provided, preferably the method object of the present invention provides the following steps:
a) the voucher is given by a user for acquiring goods or products of any kind, to a provider of goods or products,
b) the provider of the goods or products removes a part of the layer of removable material, the area covered by the layer of removable material being divided in at least two sub-areas, the two sub-areas being individually and independently covered by the layer of removable material,
c) the provider of goods and products gives the voucher to an operator of a system managing and checking the voucher, which operator removes the remaining part of the layer of removable material and enters the identification code in the database.

Therefore in the offline mode, once only a part of the removable material layer is removed, the voucher can be brought to the central site, all the removable material layer is removed and the code can be unloaded from the database.

This also considering the fact that a possible fraudulent re-covering of the identification code by means of ink should provide an evolved technology, or as an alternative it would leave clearly detectable traces upon the removal of the reapplied ink.

These and other characteristics and advantages of the present invention will be more clear from the following description of some embodiments shown in the annexed drawings wherein:
fig.1 is a luncheon voucher known in the prior art;
figs. 2a and 2b are a voucher, particularly a luncheon voucher, object of the present invention according to a possible variant embodiment, with the removable material layer removed and provided respectively;
figs. 3a and 3b are a voucher, particularly a luncheon voucher, object of the present invention according to a further variant embodiment, with the removable material layer removed and provided respectively;
fig.4 is a block of vouchers object of the present invention according to one embodiment.

It is specified that the figures described below refer to a luncheon voucher, since they show a particular embodiment of the voucher object of the present invention.

Such illustrations however do not limit the protective scope of the present patent application since it is possible to make a voucher with the same characteristics that will be described below with reference to luncheon vouchers.

Generally the voucher object of the present invention has a specific monetary value and it is intended for being given to an operator of a system managing the voucher for acquiring goods or products of any kind for a corresponding value equal to the monetary value of the voucher.

The voucher object of the present invention has an identification code, of the barcode type or the like, which univocally identifies the voucher.

Moreover the identification code is at least partially covered by a layer of removable material, such that the identification code is unreadable till the layer of removable material is removed, making the use of the voucher immediately evident.

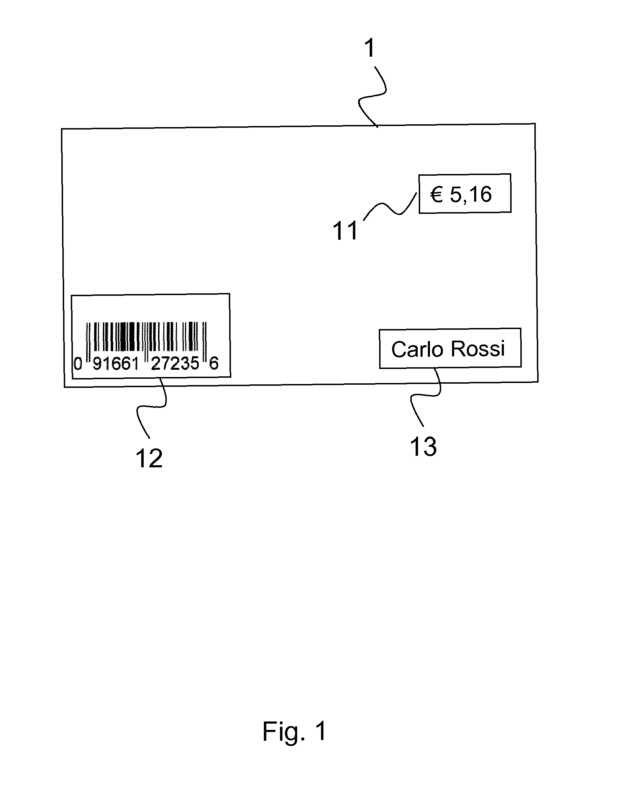

Figure 1 shows a luncheon voucher known in the prior art.

The luncheon voucher is made in the form of a sized sheet or cardboard 1 for example like a banknote that provides at least one area 11 inside which said monetary value is written and at least one area 12 inside which the identification code 121 is written.

It is possible to provide a further area 13 inside which additional information can be written such as name and surname of the user, name of the company the user works for and the expiry date of the luncheon voucher.

The identification code 121 is composed of a barcode that univocally identifies the luncheon voucher on which it is printed and it allows the operator of the management system to check the issue and the use of the luncheon vouchers.

The barcode 121 is entered by the operator of the management system into a database, such that once entered the luncheon voucher associated to the entered barcode 121 is not longer usable.

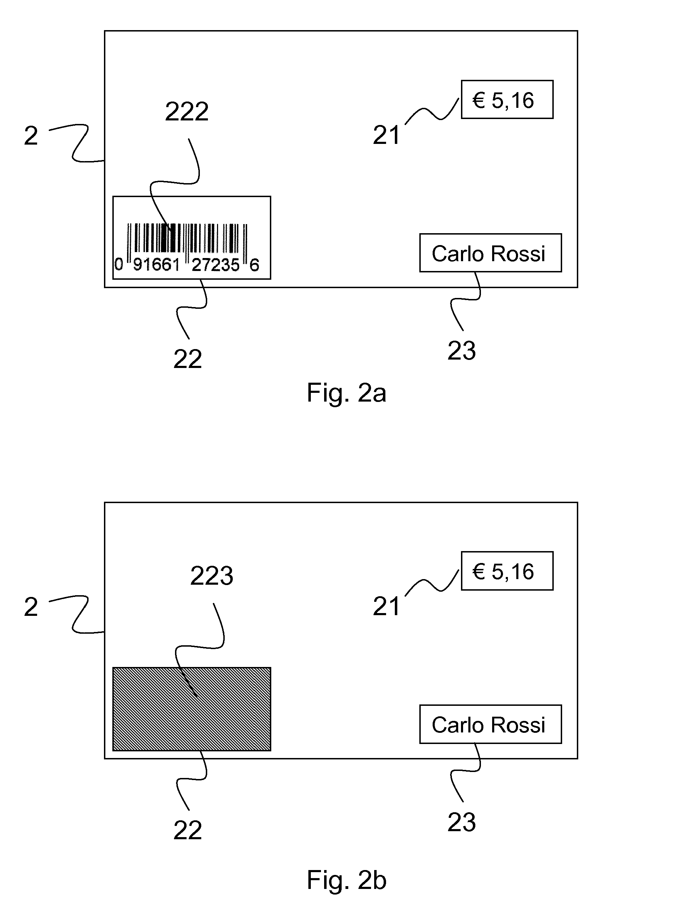

Figure 2a shows the luncheon voucher object of the present invention composed of a sized sheet 2 or cardboard, for example like a banknote, that provides an area 21 inside which the monetary value of the luncheon voucher 2 is written and an area 22 inside which the identification code 222 is written, made in the form of a barcode.

Similarly to the luncheon voucher shown in figure 1 also the luncheon voucher 2 object of the present invention has an area 23 inside which it is possible to show several data about the name and surname of the user, the name of the company and the expiry date of the luncheon voucher.

It is obviously possible to have printed all the data that are provided on known prior art luncheon vouchers.

In particular the area 22 containing the barcode 222 is covered by a removable material layer 223, shown in figure 2b.

Preferably the removable material layer is composed of a particular ink, of the type present on "scratch and win" cards, or the one present on telephone top up cards.

As an alternative the removable material layer 223 is composed of a layer of adhesive material, whose removal irreversibly damages the area 22 inside which the barcode 222 is written.

Particularly according to the variant embodiment shown in figures 2a and 2b, the area 22 inside which the barcode is written is completely covered by the layer of removable material 223.

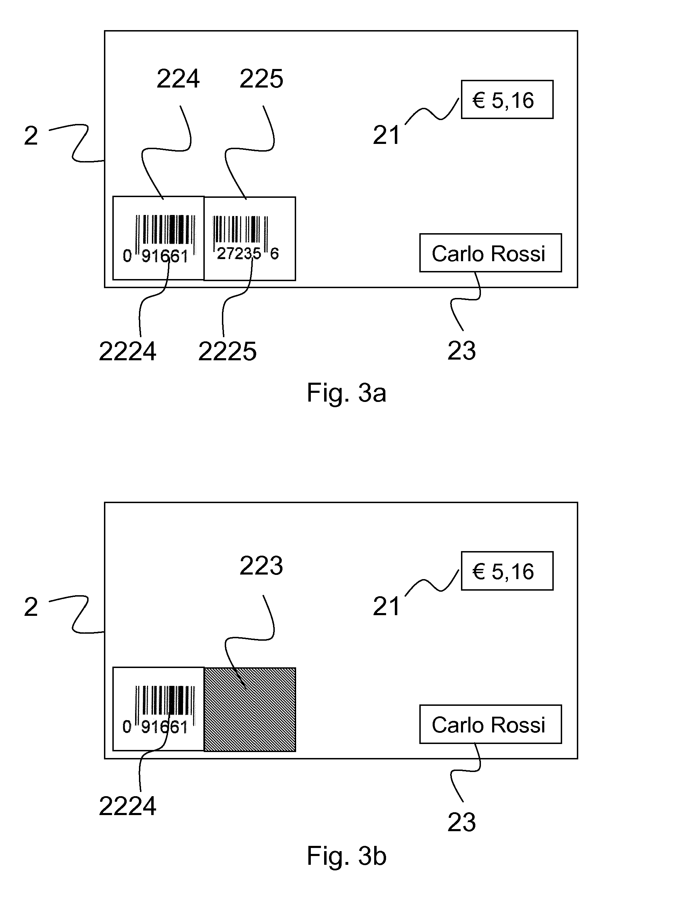

Figures 3a and 3b show the luncheon voucher object of the present invention according to a further possible embodiment, which is preferably used for the "offline" entry of the identification code.

According to such embodiment the luncheon voucher object of the present invention is like a banknote element 2 like that shown in the previous figures, but the area 22 inside which the barcode 222 is provided is divided into two sub-areas 224 and 225 both covered by the removable material layer 223, that in this case is selectively removable from each individual sub-area 224 and 225.

In particular the barcode 222 is composed of a plurality of alphanumeric characters, particularly digits, a first portion 2224 of which provided inside a first sub-area 224, while a second portion 2225 is provided into a second sub-area 225.

Said two sub-areas 224 and 225 are individually and independently covered by the removable material layer 223.

Therefore the material layer 223 can be also divided into two parts intended to cover the two different sub-areas 224 and 225.

Figure 3a show the luncheon voucher with the barcode 222 exposed, while in figure 3b the luncheon voucher is shown with a part of the removable material layer 223 removed such to make the first portion 2224 of the barcode visible, while the second portion 2225 remains covered by the removable material layer 223.

According to a possible embodiment, the first portion or the second portion of the identification code 222 is written as visible on the voucher 2, outside said area covered by the removable material layer 224.

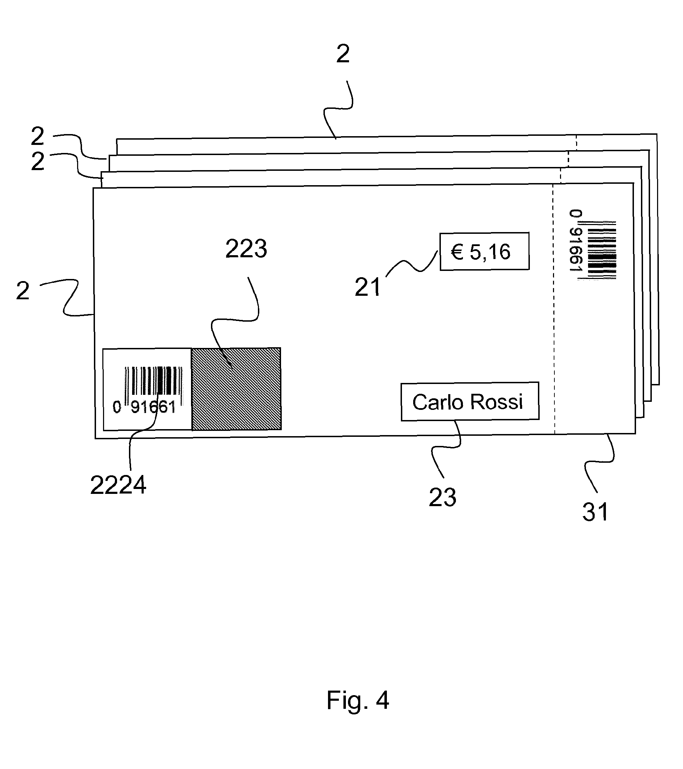

As described above the voucher object of the present invention can be provided within a block of luncheon vouchers, such as shown in figure 4.

With particular reference to figure 4, the luncheon voucher 2 is provided inserted in a block 3 containing a plurality of luncheon vouchers, which is made by joining a plurality of stubs 31.

Each stub 31 is connected to a corresponding luncheon voucher 2 by a removable interface region, that in the particular case of figure 4, is shown like a dashed line representing a discontinuous region intended to help the luncheon voucher 2 from being detached from the corresponding stub 31.

Such method is known in the prior art and it is present for example in block notes or in checkbooks, as well as in books of luncheon vouchers.

On each stub 31 there is shown a portion of the barcode 222, particularly the portion of the barcode 2224 or 2225 inserted within one of the two sub-areas 224 and 225.

Therefore as regards the "offline" entry of the barcode, only a part of the removable material layer 223 will be removed and the portion of the barcode 222 provided under the removable material layer that has been removed is duplicated on the stub 31.

## Claims

1. Voucher (2), of luncheon voucher type or the like, having a specific monetary value,
which voucher (2) is intended for being given to an operator of a system managing said voucher (2) for acquiring goods or products of any kind for a corresponding value equal to the monetary value of said voucher (2),
said voucher (2) having an identification code (222), of the barcode type or the like, which identification code (222) univocally identifies said voucher (2),
**characterized in that**
said identification code (222) is at least partially covered by a layer of removable material (223), such that said identification code (222) is unreadable till said layer of removable material (223) is removed, making the use of said voucher (2) immediately evident.

2. Voucher (2) according to claim 1, wherein said voucher (2) is composed of a sized sheet or cardboard for example like a banknote that provides at least one area (22) inside which said identification code (222) is written, said area being at least partially covered by said layer of removable material (223).

3. Voucher (2) according to claims 1 or 2, wherein said luncheon voucher (2) comprises at least one area (21) inside which said monetary value is written.

4. Voucher (2) according to one or more of the preceding claims, wherein said layer of removable material (223) is composed of a removable ink of the type provided on "scratch and win" cards.

5. Voucher (2) according to one or more of the claims 1 to 3, wherein said layer of removable material (223) is composed of a layer of adhesive material, the removal thereof irreversibly damaging said area (22) inside which said identification code (222) is written.

6. Voucher (2) according to one or more of the preceding claims, wherein said area (22) inside which said identification code (222) is written is completely covered by said layer of removable material (223).

7. Voucher (2) according to one or more of the preceding claims, wherein said area (22) is divided into at least two sub-areas (224, 225) both covered by said layer of removable material (223),
said layer of material (223) being independently and selectively removable from each individual sub-area (224, 225).

8. Voucher (2) according to one or more of the preceding claims, wherein said identification code (222) is composed of a plurality of alphanumeric characters, a first portion of which is provided inside a first sub-area (224), while a second portion is provided inside a second sub-area (225),
said two sub-areas (224, 225) being individually and independently covered by said layer of removable material (223).

9. Voucher (2) according to one or more of the preceding claims, wherein said first portion or said second portion of said identification code (222) is shown in a visible manner on said voucher, outside said area covered by said layer of removable material.

10. Voucher (2) according to one or more of the preceding claims, wherein said voucher (2) is provided inserted into a block (3) containing a plurality of vouchers (2), which block (3) is made by joining a plurality of stubs (31),
each stub (31) being connected to a corresponding voucher (2) by a removable interface region,
each stub (31) showing a portion of said identification code (222), particularly the portion of the identification code (222) inserted in one of said two sub-areas (224, 225).

11. Method for checking the validity of vouchers (2) providing the use of a voucher (2), of luncheon voucher type or the like, having a specific monetary value,
which voucher (2) is intended for being given to an operator of a system managing said voucher (2),
said voucher (2) having an identification code (222), of the barcode type or the like, which identification code (222) univocally identifies said voucher (2),
**characterized in that**
the validity of said voucher (2) is checked by reading said identification code (222),
said identification code (222) being at least partially covered by a layer of removable material (223), such that said identification code (222) is unreadable till said layer of removable material (223) is removed.

12. Method according to claim 11, wherein said voucher (2) is invalidated once the identification code (222) is read, which code is stored in a database.

13. Method according to claims 11 or 12, wherein the following steps are provided:
a) said voucher (2) is given by a user for acquiring (2) goods or products of any kind, to a provider of said goods or products,
b) said provider of the goods or products removes said layer of removable material (223) and enters said identification code (222) in said database.

14. Method according to claims 11 or 12, wherein the following steps are provided:
a) said voucher (2) is given by a user for acquiring (2) goods or products of any kind, to a provider of said goods or products,
b) said provider of the goods or products removes a part of said layer of removable material (223), the area covered by said layer of removable material (223) being divided in at least two sub-areas, said two sub-areas being individually and independently covered by said layer of removable material (223),
c) said provider of goods and products gives the voucher (2) to an operator of a system managing and checking said voucher (2), which operator removes the remaining part of the layer of removable material (223) and enters said identification code (222) in said database.
